(19) Europäisches Patentamt
European Patent Office
Office européen des brevets

(11) **EP 0 627 870 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.6: **H05B 6/06**, H02M 7/523

(21) Anmeldenummer: **94108055.8**

(22) Anmeldetag: **26.05.1994**

(54) **Verfahren zur Steuerung/Regelung von mindestens zwei Parallelschwingkreiswechselrichtern**

Method for triggering/regulating at least two parallel resonant circuit converters

Méthode pour l'excitation/régulation d'au moins deux convertisseurs à circuits oscillants parallèles

(84) Benannte Vertragsstaaten:
**DE FR GB IT**

(30) Priorität: **01.06.1993 DE 4318081**
**02.02.1994 DE 4403078**

(43) Veröffentlichungstag der Anmeldung:
**07.12.1994 Patentblatt 1994/49**

(73) Patentinhaber: **ABB PATENT GmbH**
**68309 Mannheim (DE)**

(72) Erfinder:
- **Fabianowski, Jan, Dr.**
  **D-44319 Dortmund (DE)**
- **Ibach, Robert**
  **D-58239 Schwerte (DE)**

(74) Vertreter: **Rupprecht, Klaus, Dipl.-Ing. et al**
**c/o ABB Patent GmbH,**
**Postfach 10 03 51**
**68128 Mannheim (DE)**

(56) Entgegenhaltungen:
**EP-A- 0 562 471**      **DE-A- 3 710 085**

- **PROCEEDINGS OF THE EUROPEAN CONFERENCE ON POWER ELECTRONICS AND APPLICATIONS, 9. Oktober 1989, AACHEN, DEUTSCHLAND Seiten 353 - 360, XP000143417 DING L. ; ET AL. 'A NEW SEQUENTIAL-SWITCHING VOLTAGE-CLAMPED HIGH-FREQUENCY RESONANT INVERTER WITH INDUCTIVE ENERGY REGENERATION AND PROCESSING LOOPS FOR INDUCTION-HEATING AND -MELTING POWER SUPPLY'**

EP 0 627 870 B1

## Beschreibung

Die Erfindung bezieht sich auf ein Verfahren zur Steuerung/Regelung von mindestens zwei Parallelschwingkreiswechselrichtern gemäß dem Oberbegriff des Anspruchs 1.

Ein Parallelschwingkreisumrichter für die induktive Erwärmung ist aus der Siemens-Zeitschrift 45 (1971), Heft 9, Seite 601 bis 606 bekannt. Dabei handelt es sich um eine Zwischenkreisumrichterschaltung mit eingeprägtem Strom im Zwischenkreis. Der vom netzseitigen Gleichrichter aus einer Netzwechselspannung erzeugte Gleichstrom wird im lastseitigen Wechselrichter in einen mittelfrequenten Wechselstrom umgewandelt. Die Last besteht aus einem Induktor, der die Wirkleistung induktiv auf das zu erwärmende Gut (z.B. Metallschmelze) überträgt. Zur Deckung des hohen Blindleistungsbedarfs ist der Induktor mit Hilfe von einem oder mehreren Kompensationskondensatoren zu einem Parallelschwingkreis ergänzt. Im lastgeführten Wechselrichter wird der eingeprägte Zwischenkreisstrom wechselweise im Takt der Betriebsfrequenz über sich diagonal gegenüberliegende Ventilzweige auf die Last geschaltet und erzeugt in ihr näherungsweise eine sinusförmige Spannung. Die sich einstellende Betriebsfrequenz hängt wegen der Lasttaktung direkt mit der Eigenfrequenz des Lastkreises zusammen.

Bei einer Anlage aus mehreren Induktionsöfen mit jeweils eigenen Parallelschwingkreiswechselrichtern ist es üblich, jeden Parallelschwingkreiswechselrichter an eine eigene Gleichstromquelle, d.h. einen eigenen Gleichrichter mit Gleichstromzwischenkreis anzuschließen, was sehr kostenintensiv ist.

Das unter Artikel 54(3) EPÜ fallende Dokument EP-A 0 562 471 offenbart ein Verfahren zum Ansteuern der Stromrichterventile von zwei oder mehr lastgeführten, aus einer gemeisamen Gleichstromquelle gespeisten, gleichstromseitig in Reihe geschalteten Parallelschwingkreiswechselrichtern mit jeweils einem Induktionsofen, welches eine stufenlose Einstellung bzw. Regelung der an die Induktionsöfen abgegebenen Leistung ermöglicht, wobei durch Zünden von jeweils zwei sich diagonal gegenüberliegenden Stromrichterventilen eines Wechselrichters ein Stromfluß aus der Gleichstromquelle über den an diesen Wechselrichter angeschlossenen Parallelschwingkreis eingestellt wird. Es werden jeweils zwei sich diagonal gegenüberliegende Stromrichterventile eines Wechselrichters zeitverzögert gezündet, so daß sich zeitweise ein "Kurzschlußstrom" über zwei direkt in Serie liegende Stromrichterventile dieses Wechselrichters ergibt.

Der Erfindung liegt die Aufgabe zugrunde, ein Verfahren zur Steuerung/Regelung der Stromrichterventile von zwei oder mehr aus einer gemeinsamen Gleichstromquelle oder einer gemeinsamen Gleichspannungsquelle (mit in Reihe geschalteter Drossel) gespeisten Parallelschwingkreiswechselrichtern von zwei oder mehr Induktionsöfen der eingangs genannten Art anzugeben, das eine stufenlose Einstellung der von der Gleichstromquelle oder der Gleichspannungsquelle gelieferten Leistung und Aufteilung an die einzelnen Induktionsöfen ermöglicht.

Diese Aufgabe wird erfindungsgemäß durch die im Anspruch 1 angegebenen Merkmale gelöst.

Dabei wird davon ausgegangen, daß jeder der Wechselrichter mit Lastkreis als Widerstand hinter dem Zwischenkreis (Gleichstromzwischenkreis) aufgefaßt werden kann. Durch geeignete Wechselrichtersteuerung wird der Wert dieser Widerstände geändert.

Die mit der Erfindung erzielbaren Vorteile bestehen insbesondere darin, daß zwei oder mehr Parallelschwingkreiswechselrichter - die jeweils einem eigenen Induktionsofen zugehörig sind - aus einer gemeinsamen Gleichstromquelle oder einer gemeinsamen Gleichspannungsquelle mit lediglich einem Gleichrichter zur Umformung einer Netzwechselspannung in eine Gleichspannung gespeist werden. Die momentan erzeugte Gleichrichterleistung entspricht der Summe aller momentan verbrauchten Parallelschwingkreiswechselrichterleistungen. Dabei ist es beispielsweise möglich, die installierte Gleichrichterleistung nach der installierten Leistung eines Parallelschwingkreiswechselrichters zu bemessen. Das hat den Vorteil hoher Kosteneinsparungen im Vergleich zur konventionellen Technik, bei der jeder Parallelschwingkreiswechselrichter einen eigenen Gleichrichter mit auf den Parallelschwingkreiswechselrichter abgestimmter Leistung benötigt. Gemäß der Erfindung ist es möglich, die momentan verbrauchten Parallelschwingkreiswechselrichterleistungen stufenlos und unabhängig voneinander einzustellen, wobei die Summe aller momentan benötigten Wechselrichterleistungen selbstverständlich nicht die installierte Gleichrichterleistung überschreiten darf. Besonders vorteilhaft ist es, wenn die Summe der momentan verbrauchten Wechselrichterleistungen während aller unterschiedlichen Betriebsphasen stets 100 % der installierten Gleichrichterleistung beträgt, da dann der Gleichrichter optimal genutzt wird.

Bei beiden Wechselrichtern ist ein sehr weiter Leistungssteuerbereich (1:100 und mehr) möglich.

Die Erfindung wird nachstehend anhand der in der Zeichnung dargestellten Ausführungsbeispiele erläutert. Es zeigen:

Figur 1      zwei über jeweils einen eigenen Wechselrichter gespeiste Parallelschwingkreise von zwei Induktionsöfen,

Figur 2      den zeitlichen Verlauf der Spannung am Kondensator eines Schwingkreises und des Stromes über diesen Schwingkreis,

Figur 3      den Zusammenhang zwischen Impedanz eines Schwingkreises und der Schwingkreisfrequenz,

Figur 4      eine Prinzipskizze zur Zündwinkel-Einstellung bei Speisung der Wechselrichter aus einer Gleichspannungsquelle,

Figur 5     eine Prinzipskizze zur Zündwinkel-Einstellung bei Speisung der Wechselrichter aus einer Gleichstromquelle,

Figur 6     eine Anlage mit vier von einer Gleichstromquelle gespeisten Parallelschwingkreiswechselrichtern und eine Steuereinrichtung zur Leistungseinstellung und Leistungsaufteilung,

Figur 7     eine Anlage gemäß Figur 6, jedoch bei einer Speisung mit einer Gleichspannungsquelle.

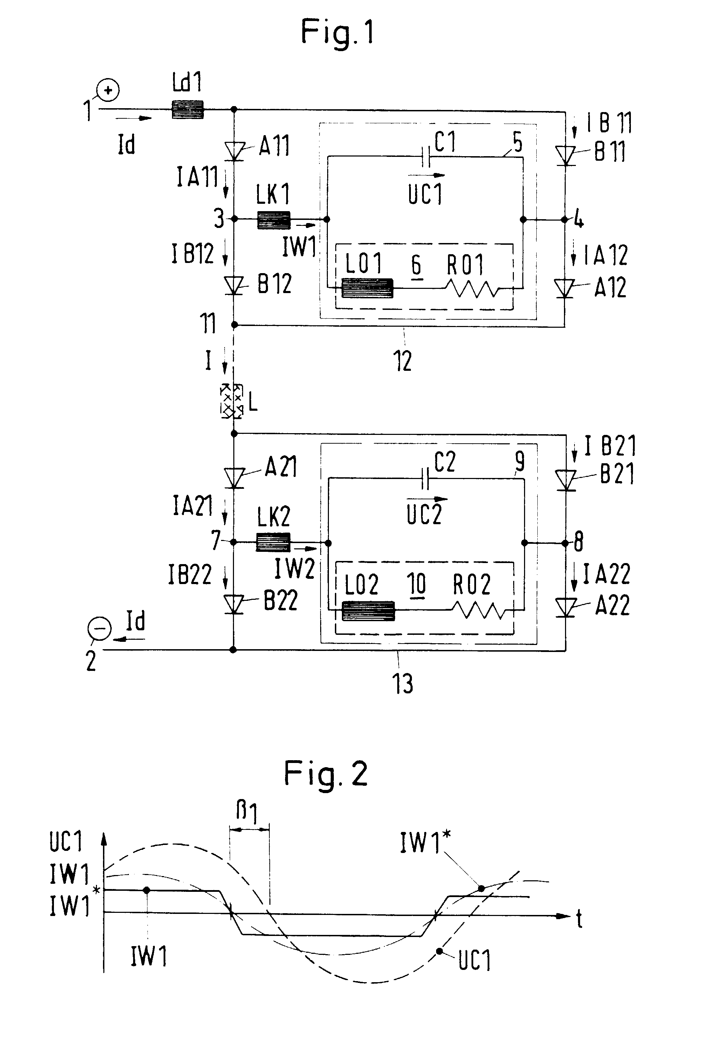

In Figur 1 sind zwei über jeweils einen eigenen Wechselrichter gespeiste Parallelschwingkreise von zwei Induktionsöfen dargestellt. Es ist ein aus vier Stromrichterventilen A11, A12, B11, B12 bestehender erster Wechselrichter 12 zu erkennen, wobei die Anoden der Ventile A11 und B11 über einer Glättungsdrossel Ld1 am positiven Pol 1 und die Kathoden der Ventile B12 und A12 am Verbindungspunkt 11 beider Wechselrichter liegen. Der Verbindungspunkt 11 ist gleichzeitig negativer Pol für den ersten Wechselrichter 12. Der Verbindungspunkt der Kathode des Ventils A11 und der Anode des Ventils B12 bildet den ersten Lastanschluß 3 sowie der Verbindungspunkt der Kathode des Ventils B11 und der Anode des Ventils A12 den zweiten Lastanschluß 4 des ersten Wechselrichters 12.

Zwischen beiden Lastanschlüssen 3, 4 ist ein Parallelschwingkreis 5 geschaltet, wobei eine Kommutierungsinduktivität LK1 zwischen Lastanschluß 3 und Parallelschwingkreis 5 angeordnet ist. Der Parallelschwingkreis 5 besteht aus einer Spule 6 eines ersten Induktionsofens und einem parallelgeschalteten Kondensator C1 (Kompensationskondensator), wobei die Spule 6 eine Induktivität LO1 und einen ohmschen Widerstand RO1 aufweist.

Zwischen dem Verbindungspunkt 11 und dem negativen Pol 2 einer Gleichstromquelle oder Gleichspannungsquelle ist ein zweiter Wechselrichter 13 angeordnet. Positiver Pol 1 und negativer Pol 2 werden vorzugsweise über einen Gleichrichter aus einem Drehstromnetz gespeist. Der zweite Wechselrichter 13 weist vier Stromrichterventile A21, A22, B21, B22 und zwei Lastanschlüsse 7, 8 auf und speist einen zwischen beiden Lastanschlüssen 7, 8 liegenden zweiten Parallelschwingkreis 9 mit Spule 10 (mit Induktivität LO2 und Widerstand RO2) und Kondensator C2. Zwischen Lastanschluß 7 und Parallelschwingkreis 9 ist eine Kommutierungsinduktivität LK2 geschaltet.

Der Eingangsstrom der beiden Wechselrichter 12, 13, d.h. der von der Gleichstromquelle oder Gleichspannungsquelle gespeiste, über die Glättungsdrossel Ld1 fließende Strom ist mit Id bezeichnet. Die Stromflüsse über die Ventile A11, A12, B11, B12 bzw. A21, A22, B21, B22 lauten IA11, IA12, IB11, IB12 bzw. IA21, IA22, IB21, IB22. Der Ausgangsstrom des ersten Wechselrichters 12, d.h. der Stromfluß über die Kommutierungsinduktivität LK1 und den Parallelschwingkreis 5 ist mit IW1 bezeichnet. Die Spannung am ersten Kondensator C1 beträgt UC1. Der Ausgangsstrom des zweiten Wechselrichters 13 ist mit IW2 bezeichnet und die Spannung am zweiten Kondensator beträgt UC2.

In Figur 2 ist der zeitliche Verlauf der Spannung am Kondensator eines Schwingkreises und des Stromes über diesen Schwingkreis dargestellt. Es sind die Spannung UC1 und der bezüglich der Spannung voreilende Strom IW1 zu erkennen. Mit IW1* ist die erste Harmonische dieses Stromes bezeichnet. Der Zeitraum zwischen Nulldurchgang der Spannung UC1 und Nulldurchgang des Stromes IW1* entspricht dem Lastphasenwinkel $\beta 1$ des ersten Parallelschwingkreiswechselrichters 12. Zur Arbeitsweise des Parallelschwingkreiswechselrichters wird allgemein auf die DE 30 23 697 A1 und die Siemens-Zeitschrift 45 (1971), Heft 9, Seiten 601 bis 606 hingewiesen.

Prinzipiell können die Eigenfrequenzen beider Schwingkreise unterschiedlich sein, d.h. die Frequenz der Spannung UC2 ist unabhängig von der Frequenz der Spannung UC1. Dies ist verständlich, da die Frequenzen der Spannungen UC1, UC2 von den Kapazitäten der Kondensators C1, C2 sowie von den Widerständen RO1, RO2 und den Induktivitäten LO1, LO2 der Induktionsöfen abhängen (u. a. beeinflußt die Ofenfüllung die Frequenz). Die Ansteuerung der Ventile der Wechselrichter erfolgt unter Beachtung dieser Frequenzen, wobei Randbedingungen, wie genügend hohe Spannung an den Kondensatoren der Parallelschwingkreise und Ventil-Schonzeiten zu beachten sind.

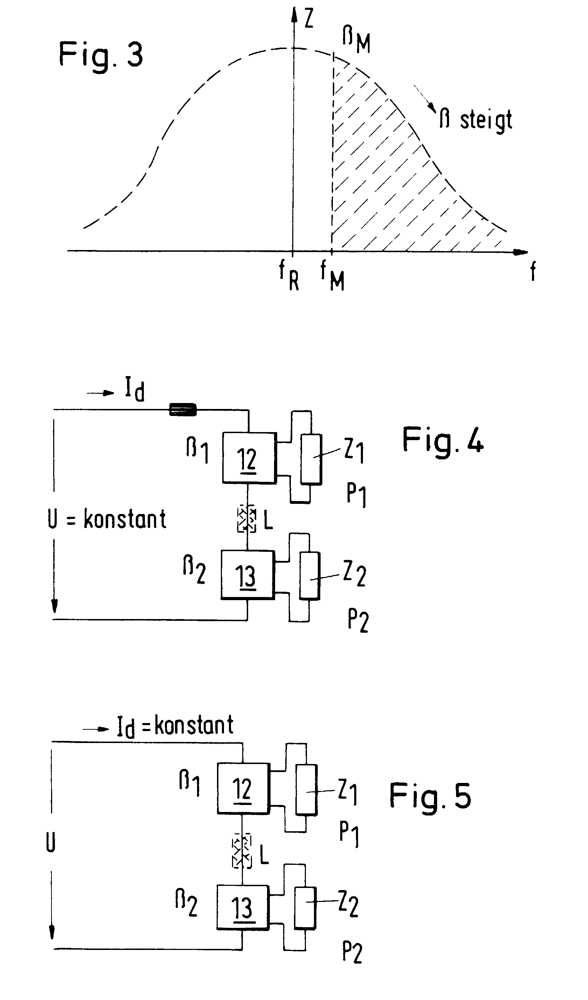

In Figur 3 ist der Zusammenhang zwischen Impedanz eines Schwingkreises und der Schwingkreisfrequenz dargestellt. Die gezeigte Impedanzkurve drückt die Gleichung aus:

$$Z = \frac{\frac{1}{j\omega C}(R+j\omega L)}{R+j\omega L+\frac{1}{j\omega C}} = \underbrace{\frac{R}{\omega^2 LC+\omega RC+1}}_{Re(Z)} + j\underbrace{\frac{\omega L}{\omega^2 LC+\omega RC+1}}_{IM(Z)}$$

mit

$\omega = 2\,\pi f$,

Z = Impedanz des Schwingkreises,

$\omega$ = Kreisfrequenz,
f = Frequenz des Schwingkreises,
C = C1, C2...,
L = L01, L02...,
R = R01, R02...
Re(Z) = Realteil von Z
Im(Z) = Imaginärteil von Z

Mit $f_R$ ist die Resonanzfrequenz des Schwingkreises bezeichnet, während $f_M$ der Minimalwert der Frequenz ist, der sich bei Einstellung des Minimalwertes $\beta_M$ des Lastphasenwinkels $\beta$ ergibt. Bei Festlegung des Minimalwertes $\beta_M$ ist die notwendige Schonzeit der Stromrichterventile zu beachten. Die Schwingkreisfrequenz ist stets höher als die Resonanzfrequenz. Die Einstellung des Lastphasenwinkels $\beta \geq \beta_M$ bzw. der entsprechenden Zündimpulse erfolgt im schraffiert gekennzeichneten Bereich der Impedanzkurve (Arbeitsbereich). Wie zu erkennen ist, steigt die Frequenz f bei größer werdendem Lastphasenwinkel $\beta$, während gleichzeitig die Impedanz Z abnimmt.

In Figur 4 ist eine Prinzipskizze zur Zündwinkel-Einstellung bei Speisung der Wechselrichter aus einer Gleichspannungsquelle mit in Reihe geschalteter Drossel dargestellt. Es ist von einem Zustand mit einem Lastphasenwinkel $\beta_1$ des ersten Wechselrichters 12 und einem Lastphasenwinkel $\beta_2$ des zweiten Wechselrichters 13 auszugehen. Gemäß Impedanzkurve nach Figur 3 liegen Impedanzen $Z_1$ bzw. $Z_2$ bei diesen Lastphasenwinkeln $\beta_1$ bzw. $\beta_2$ vor. Die Gesamtimpedanz Z beträgt $Z_1 + Z_2$. Für den sich bei konstanter Spannung U ergebenden Gleichstrom $I_d$ gilt $I_d = U/Re(Z_1+Z_2)$. Die Leistung des ersten Schwingkreises beträgt $P_1 = I_d^2 \cdot Re(Z_1)$ und die Leistung des zweiten Schwingkreises beträgt $P_2 = I_d^2 \cdot Re(Z_2)$.

Der Betreiber der Induktionsöfen möchte eine veränderte Leistung $P_1'$ für den ersten Schwingkreis und $P_2'$ für den zweiten Schwingkreis vorgeben, wobei die Leistungssumme $P_1' + P_2'$ selbstverständlich nicht die Maximalleistung der Gleichspannungsquelle überschreiten darf. Der veränderte Stromfluß $I_d'$ ergibt sich gemäß $I_d' = (P_1' + p_2')/U$. Die einzustellende veränderte Impedanz $Z_1'$ folgt aus $Re(Z_1)' = P_1'/I_d'^2$ und die einzustellende veränderte Impedanz $Z_2'$ resultiert aus $Re(Z_2)' = P_2'/I_d'^2$. Gemäß der Impedanzkurve nach Figur 3 ergeben sich entsprechend den Impedanzen $Z_1'$ und $Z_2'$ einzustellende Lastphasenwinkel $\beta_1'$ und $\beta_2'$. Während des Betriebes bleibt die Gleichspannungsquelle zur Einstellung der veränderten Leistungen $P_1'$, $P_2'$ soweit wie möglich voll ausgesteuert. Wenn jedoch einer der neu einzustellenden Lastphasenwinkel den Mimimalwert $\beta_M$ erreicht und der Strom $I_d$ noch zu groß ist, muß die Spannung U durch Eingriff in die Steuerung/Regelung der Gleichspannungsquelle (netzseitiger Gleichrichter) herabgesetzt werden, um die Leistung der Gleichspannungsquelle zu reduzieren.

In Figur 5 ist eine Prinzipskizze zur Zündwinkel-Einstellung bei Speisung der Wechselrichter aus einer Gleichstromquelle dargestellt. Es ist von einem Zustand mit einem Lastphasenwinkel $\beta_1$ des ersten Wechselrichters 12 und einem Lastphasenwinkel $\beta_2$ des zweiten Wechselrichters 13 auszugehen. Gemäß Impedanzkurve nach Figur 3 liegen Impedanzen $Z_1$ bzw. $Z_2$ für die Lastphasenwinkel $\beta_1$ bzw. $\beta_2$ vor. Die Gesamtimpedanz Z beträgt $Z_1 + Z_2$. Für die sich bei konstantem Strom $I_d$ ergebende Spannung gilt $U = Re(Z_1+Z_2) \cdot I_d$. Die Leistung des ersten Schwingkreises beträgt $P_1 = U^2/Re(Z_1)$ und die Leistung des zweiten Schwingkreises beträgt $P_2 = U_d^2/Re(Z_2)$.

Der Betreiber der Induktionsöfen möchte eine veränderte Leistung $P_1'$ für den ersten Schwingkreis und $P_2'$ für den zweiten Schwingkreis vorgeben, wobei die Leistungssumme $P_1' + P_2'$ selbstverständlich nicht die Maximalleistung der Gleichstromquelle überschreiten darf. Die veränderte Spannung ergibt sich gemäß $U' = (P_1' + P_2')/I_d$. Die einzustellende veränderte Impedanz $Z_1'$ folgt aus $Re(Z_1)' U'^2/P_1'$ und die einzustellende veränderte Impedanz $Z_2'$ resultiert aus $Re(Z_2)' = U'^2/P_2'$. Gemäß der Impedanzkurve nach Figur 3 ergeben sich entsprechend den Impedanzen $Z_1'$ und $Z_2'$ einzustellende Lastphasenwinkel $\beta_1'$ und $\beta_2'$. Während des Betriebes bleibt die Gleichstromquelle zur Einstellung der veränderten Leistungen $P_1'$, $P_2'$ soweit wie möglich voll ausgesteuert. Wenn jedoch einer der neu einzustellenden Lastphasenwinkel den Mimimalwert $\beta_M$ erreicht und die Spannung U' noch zu groß ist, muß der Strom $I_d$ durch Eingriff in die Steuerung/Regelung der Gleichstromquelle (netzseitiger Gleichrichter) herabgesetzt werden, um die Leistung der Gleichstromquelle zu reduzieren.

Prinzipiell können die dem ersten bzw. zweiten Induktionsofen zugeführten Leistungen unabhängig voneinander und stufenlos eingestellt werden, der erste Induktionsofen kann beispielsweise mit 80% seiner Nennleistung und der zweite Induktionsofen mit 50% seiner Nennleistung betrieben werden. Es ist jedoch besonders vorteilhaft, wenn sich die Leistungssumme bei Induktionsöfen gleicher Nennleistung in allen Betriebsfällen zu 100% oder weniger ergibt, d.h. der erste Induktionsofen wird beispielsweise mit 10% seiner Nennleistung und der zweite Induktionsofen gleichzeitig mit 90% seiner Nennleistung betrieben. Bei einer derartigen alternativen Betriebsweise von zwei Induktionsöfen muß die Gleichstromquelle (z.B. Gleichrichter mit Gleichstromzwischenkreis) oder die Gleichspannungsquelle mit in Reihe geschalteter Drossel nur für 100% der Leistung eines Parallelschwingkreiswechselrichters ausgelegt werden, kann aber zwei Induktionsöfen mit beispielsweise je 90% Leistung abwechselnd speisen, wobei jeweils ein Ofen z.B. im Schmelzbetrieb mit 90% Leistung und der andere Ofen gleichzeitig im Warmhaltebetrieb mit 10% Leistung arbeitet. Es ist selbstverständlich möglich, beide Induktionsöfen auch gleichzeitig im Warmhaltebetrieb mit je 10% Leistung arbeiten zu lassen, wobei hierzu die von der Gleichstromquelle oder Gleichspannungsquelle abzugebende Leistung beispielsweise durch entsprechende Beeinflussung der Ventile des netzseitigen Gleichrichters herabgesetzt werden kann.

Die vorstehenden Erläuterungen beziehen sich auf eine Anordnung mit zwei Parallelschwingkreiswechselrichtern. Wie jedoch bereits angedeutet ist, können weitere Parallelschwingkreiswechselrichter vorhanden sein, d.h. es sind Anlagen mit wahlweise zwei, drei, vier usw. Parallelschwingkreiswechselrichtern einsetzbar, wobei die Parallelschwingkreiswechselrichter gleichstromseitig in Serie geschaltet sind. Zweckmäßig erfolgt die Ansteuerung der einzelnen Parallelschwingkreiswechselrichter in gegenseitig abgestimmter Weise derart, daß die Gleichstromquelle oder Gleichspannungsquelle vorzugsweise 100% Leistung abgibt, wobei diese Leistung in gewünschter Art und Weise auf die einzelnen Parallelschwingkreiswechselrichter aufgeteilt wird. Bei einer derartigen Betriebsweise mit vollausgesteuertem netzseitigen Gleichrichter ist sichergestellt, daß die Gleichstromquelle oder Gleichspannungsquelle ein vorgeschaltetes Drehstromsystem mit minimalem Blindleistungsbedarf und minimalem Oberwellenspektrum belastet.

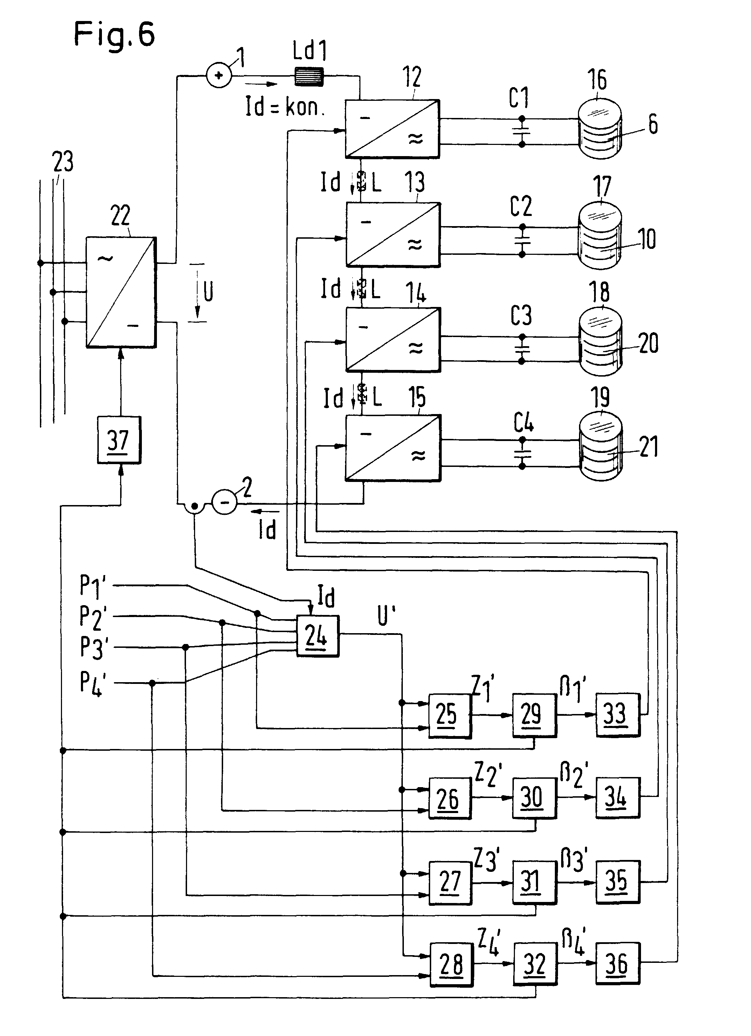

In Figur 6 sind eine Anlage mit vier von einer Gleichstromquelle gespeisten Parallelschwingkreiswechselrichtern und eine Steuereinrichtung zur Leistungseinstellung und Leistungsaufteilung dargestellt. Es sind vier Parallelschwingkreiswechselrichter 12, 13, 14, 15 zu erkennen, die gleichstromsseitig in Reihe zwischen positivem Pol 1 und negativem Pol 2 der Gleichstromquelle liegen, wobei ein an ein Drehstromnetz 23 angeschlossener Gleichrichter 22 und die Glättungsdrossel Ld1 als Gleichstromquelle dienen. Die Spulen 6, 10, 20, 21 und die Kondensatoren C1, C2, C3, C4 der Parallelschwingkreise sind Induktionsöfen 16, 17, 18, 19 zugeordnet. Bei einer Nennleistung 100% je Parallelschwingkreiswechselrichter 12 bis 15 wird die Gleichstromquelle vorzugsweise auf 200% dieser Leistung ausgelegt, wobei beispielsweise zwei Induktionsöfen gleichzeitig mit je 90% Nennleistung (Schmelzbetrieb) und zwei Induktionsöfen mit je 10% Nennleistung (Warmhaltebetrieb) optimal betrieben werden können.

Die (beispielsweise digitale) Steuereinrichtung weist ein Rechenglied 24 auf, dem eingangsseitig die einzustellenden Leistungen $P_1'$, $P_2'$, $P_3'$, $P_4'$ und der Gleichstrom Id eingegeben werden, und das aus diesen Größen die bei der einzustellenden Gesamtleistung und bei konstantem Strom $I_d$ notwendige Spannung U'als Hilfsgröße berechnet: $U' = (P_1'+P_2'+P_3'+P_4')/I_d$. Dabei begrenzt das Rechenglied 24 gegebenenfalls die einzustellende Leistung auf den Maximalwert der Gleichstromquelle, falls die Summe $P_1'+P_2'+P_3'+P_4'$ diesen Maximalwert überschreiten sollte.

Ein Rechenglied 25 ermittelt aus $P_1'$ und U' die Impedanz $Z_1'$. Desgleichen ermitteln ein Rechenglied 26 aus $P_2'$ und U' die Impedanz $Z_2'$, ein Rechenglied 27 aus $P_3'$ und U' die Impedanz $Z_3'$ und ein Rechenglied 28 aus $P_4'$ und U' die Impedanz $Z_4'$.

Die von den Rechengliedern 25 bis 28 ermittelten Impedanzen $Z_1'$ bis $Z_4'$ werden Speichergliedern 29 bis 32 zugeleitet. In diesen Speichergliedern ist die Impedanzkurve gemäß Figur 3 abgelegt, so daß aus den Impedanzen Z' jeweils die einzustellenden Lastphasenwinkel β' ermittelt werden können. Auf diese Weise ermittelt Speicherglied 29 den Lastphasenwinkel $β_1'$ aus Impedanz $Z_1'$, Speicherglied 30 den Lastphasenwinkel $β_2'$ aus Impedanz $Z_2'$, Speicherglied 31 den Lastphasenwinkel $β_3'$ aus Impedanz $Z_3'$ und Speicherglied 32 den Lastphasenwinkel $β_4'$ aus Impedanz $Z_4'$.

Zündimpulsbildner 33, 34, 35, 36 erzeugen die den ermittelten Lastphasenwinkeln $β_1'$, $β_2'$, $β_3'$, $β_4'$ entsprechenden Zündimpulse für die Ventile der Parallelschwingkreiswechselrichter 12, 13, 14, 15.

Wenn keiner der ermittelten Lastphasenwinkel $β_1'$ ... $β_4'$ den Minimalwert $β_M$ unterschreitet bzw. erreicht, wird in die Steuerung/Regelung des vollausgesteuerten netzseitigen Gleichrichters 22 nicht eingegriffen. Sollte jedoch einer der Lastphasenwinkel $β_1'$...$β_4'$ diesen Wert $β_M$ erreichen, gibt das betroffene Speicherglied 29...32 ein entsprechendes Signal an eine Regel/Steuereinrichtung 37 des Gleichrichters 22 ab, so daß der Strom $I_d$ verkleinert wird, um eine Leistungsreduzierung zu bewirken. Die Reduzierung des Stromes $I_d$ erfolgt derart, daß der betroffene Wechselrichter mit einem Lastphasenwinkel betrieben werden kann, der geringfügig über dem Wert $β_M$ liegt. Die Spannung U', die Impedanzen $Z_1'$...$Z_4'$ und die Lastphasenwinkel $β_1'$...$β_4'$ ergeben sich entsprechend dem reduzierten Strom.

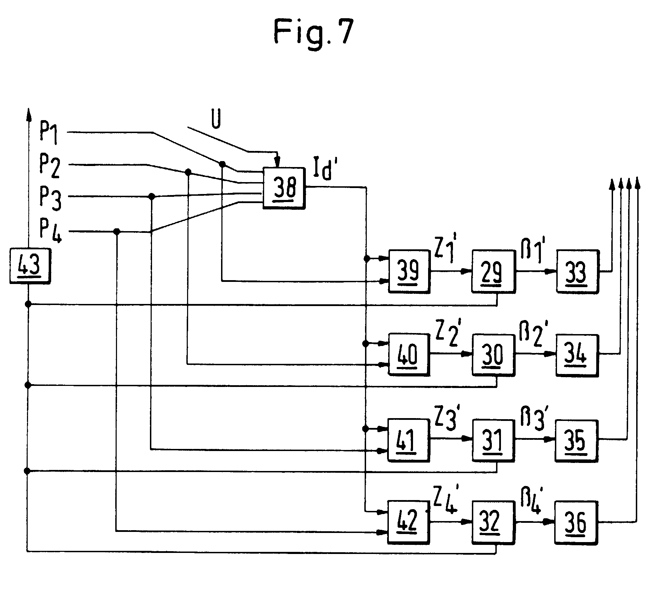

In Figur 7 ist eine Anlage mit Steuereinrichtung wie unter Figur 6 dargestellt, jedoch im Unterschied hierzu bei einer Speisung mit einer Gleichspannungsquelle mit in Reihe geschalteter Drossel. Die (beispielsweise digitale) Steuereinrichtung ändert sich wie folgt:

Ein Rechenglied 38 ermittelt aus den einzustellenden geänderten Leistungen $P_1'$, $P_2'$, $P_3'$, $P_4'$ und der Gleichspannung U als Hilfsgröße den bei der einzustellenden Gesamtleistung notwendigen geänderten Strom $I_d'$.

Ein Rechenglied 39 bestimmt aus $P_1'$ und $I_d'$ die Impedanz $Z_1'$. Desgleichen ermitteln ein Rechenglied 40 aus $P_2'$ und $I_d'$ die Impedanz $Z_2'$, ein Rechenglied 41 aus $P_3'$ und $I_d'$ die Impedanz $Z_3'$ und ein Rechenglied 42 aus $P_4'$ und $I_d'$ die Impedanz $Z_4'$.

Die Bestimmung der einzustellenden Lastphasenwinkel $β_1'$, $β_2'$, $β_3'$ und $β_4'$ aus den Impedanzen $Z_1'$, $Z_2'$, $Z_3'$ und $Z_4'$ mittels Speichergliedern 29 sowie die Erzeugung der entsprechenden Zündimpulse für die Ventile der Parallelschwingkreiswechselrichter mittels Zündimpulsbildner erfolgt wie unter Figur 6 beschrieben. Desgleichen wird eine Regel/Steuereinrichtung 43 der Gleichspannungsquelle lediglich dann beeinflußt, wenn einer der Lastphasenwinkel $β_1'$... $β_4'$ den Wert $β_M$ erreicht, um die Spannung U zu verkleinern und damit eine Reduktion des Stromes $I_d$ zu erzielen. Die Reduktion des Stromes $I_d$ erfolgt derart, daß der Gleichrichter zurückgesteuert wird (Reduktion seiner Ausgangsspannung). Der Strom $I_d'$, die Impedanzen $Z_1'$...$Z_4'$ und die Lastphasenwinkel $β_1'$...$β_4'$ ergeben sich entsprechend der reduzierten Spannung.

In den Figuren 1, 4, 5 und 6 ist jeweils gestrichelt angedeutet, daß Drosseln L zwischen den einzelnen Parallelschwingkreiswechselrichtern zur Entkopplung angeordnet sind.

## Patentansprüche

1. Verfahren zur Steuerung/Regelung der Stromrichterventile von zwei oder mehr aus einer gemeinsamen Gleichstromquelle bzw. Gleichspannungsquelle gespeisten, gleichstromseitig in Reihe geschalteten, lastgeführten Parallelschwingkreiswechselrichtern mit jeweils einem Induktionsofen mit Kompensationskondensator, wobei durch Zünden von jeweils zwei sich diagonal gegenüberliegenden Stromrichterventilen eines Wechselrichters ein Stromfluß aus der Gleichstromquelle bzw. Gleichspannungsquelle mit in Reihe geschalteter Drossel über den an diesen Wechselrichter angeschlossenen Parallelschwingkreis eingestellt wird, wobei die Lastphasenwinkel ($\beta$) der Parallelschwingkreiswechselrichter derart eingestellt werden, daß einerseits die beliebig vorgegebenen einzelnen Leistungen ($P_1, P_2$) der Parallelschwingkreise (5,9) resultieren, wobei die maximal von der Gleichstromquelle bzw. Gleichspannungsquelle abgebbare Leistung berücksichtigt wird und daß andererseits das vorgegebene Verhältnis zwischen den einzelnen Leistungen ($P_1, P_2$) der Parallelschwingkreise (5,9) erzielt wird und daß in die Steuerung/Regelung der Gleichstromquelle bzw. Gleichspannungsquelle erst dann eingegriffen wird, wenn einer der einzustellenden Lastphasenwinkel ($\beta$) den insbesondere durch Ventil-Schonzeiten bedingten Mimimalwert ($\beta_M$) erreicht, um den Gleichstrom ($I_d$) bzw. die Gleichspannung (U) zu reduzieren, während bei einzustellenden Lastphasenwinkeln über dem Mimimalwert ($\beta_M$) die Gleichstromquelle bzw. Gleichspannungsquelle voll ausgesteuert betrieben wird.

2. Verfahren nach Anspruch 1, dadurch gekennzeichnet, daß bei Einspeisung mit einer Gleichstromquelle die geänderte Spannung (U') der Gleichstromquelle aus der Summe der einzustellenden geänderten Leistungen ($P_1', P_2'$) und dem konstanten Strom ($I_d$) als Hilfsgröße bestimmt wird, daß die geänderte Impedanz ($Z_1', Z_2'$) eines jeden Parallelschwingkreises aus der geänderten Spannung (U') und der einzustellenden geänderten Leistung ($P_1', P_2'$) dieses Schwingkreises ermittelt wird und daß die Lastphasenwinkel ($\beta_1', \beta_2'$) aus den ermittelten geänderten Impedanzen ($Z_1', Z_2'$) bestimmt werden.

3. Verfahren nach Anspruch 1, dadurch gekennzeichnet, daß bei Einspeisung mit einer Gleichspannungsquelle mit in Reihe geschalteter Drossel der geänderte Strom ($I_d'$) unter Beachtung der einzustellenden geänderten Leistungen ($P_1', P_2'$) und der Spannung (U) als Hilfsgröße bestimmt wird, daß die geänderte Impedanz ($Z_1', Z_2'$) eines jeden Parallelschwingkreises aus dem geänderten Strom ($I_d'$) und der einzustellenden geänderten Leistung ($P_1', P_2'$) dieses Schwingkreises ermittelt wird und daß die Lastphasenwinkel ($\beta_1', \beta_2'$) aus den ermittelten geänderten Impedanzen ($Z_1', Z_2'$) bestimmt werden.

## Claims

1. A method for triggering/regulating converter valves of two or more load-commutated parallel resonant circuit converters which are supplied by a common DC source or DC voltage source, are switched in series on the DC side and comprise one induction furnace each with a compensating capacitor, with a current flow from the DC source or DC voltage source with a choke connected in series being set through the parallel resonant circuit which is connected to the inverted rectifier by igniting two diagonally opposite converter valves of an inverted rectifier, with the the load phase angle ($\beta$) of the parallel resonant circuit converters being set in such a way that on the one hand the randomly predetermined individual outputs ($P_1$, $P_2$) of the parallel resonant circuits (5, 9) are obtained, with the maximum output as can be supplied from the DC source or the DC voltage source being taken into account, and that on the other hand the predetermined ratio between the individual outputs ($P_1$, $P_2$) of the parallel resonant circuits (5, 9) is achieved and that intervention in the triggering/regulation of the DC source or DC voltage source is only made when one of the load phase angles ($\beta$) to be set reaches the minimum value ($\beta_M$) which is caused by the valve hold-off times in particular so as to reduce the DC ($I_d$) or the DC voltage (U), whereas the DC source or DC voltage source is operated in a fully triggered manner in the case of load phase angles to be set above the minimum value ($\beta_M$).

2. A method as claimed in claim 1, characterized in that in the case of a supply with a DC source the altered voltage (U') of the DC source is determined as an auxiliary value from the sum total of the altered outputs ($P_1'$, $P_2'$) to be set and the constant current ($I_d$), that the altered impedance ($Z_1'$, $Z_2'$) of every single parallel resonant circuit is determined from the altered voltage (U') and the altered output ($P_1$', $P_2$') to be set of said resonant circuit and that the load phase angles (β1', β2') are determined from the determined altered impedances ($Z_1$', $Z_2$').

3. A method as claimed in claim 1, characterized in that in the case of a supply with a DC voltage source with a choke connected in series the altered current ($I_d$') is determined as an auxiliary value by taking into account the altered outputs ($P_1$', $P_2$') to be set and the voltage (U), that the altered impedance ($Z_1$', $Z_2$') of every single parallel resonant circuit is determined from the altered current ($I_d$') and the altered output ($P_1$', $P_2$') to be set of said resonant circuit and that the load phase angles (β1', β2') are determined from the determined altered impedances ($Z_1$', $Z_2$').

**Revendications**

1. Méthode d'excitation et de régulation des valves de convertisseur de deux ou plusieurs convertisseurs à circuits oscillants parallèles alimentés par une source de courant continu ou de tension continue commune, montés en série sur le côté du courant continu et commandés par la charge, associés chacun à un four à induction avec condensateur de compensation, dans laquelle le déclenchement de deux valves de chaque convertisseur se faisant face en diagonale à la fois régule un flux de courant provenant de la source de courant continu ou de la source de tension continue avec bobine d'arrêt montée en série par l'intermédiaire du circuit oscillant parallèle raccordé à ce redresseur, l'angle de phase de charge (β) des convertisseurs à circuits oscillants parallèles étant réglé de manière à obtenir, d'une part, les puissances ($P_1$, $P_2$) individuelles prédéterminées des circuits oscillants parallèles (5, 9), la puissance maximale pouvant être délivrée par la source de courant continu ou de tension continue étant alors prise en compte, et d'autre part à obtenir le rapport prédéterminé entre les différentes puissances ($P_1$, $P_2$) des circuits oscillants parallèles (5, 9), et la commande/régulation de la source de courant continu ou de tension continue n'étant influencée que lorsque l'un des angles de phase de charge (β) à établir atteint la valeur minimale ($β_M$) déterminée notamment par les temps de ménagement des valves, afin de réduire l'intensité de courant continu (Id) ou la tension continue (U), tandis que la source de courant continu ou de tension continue est réglée au maximum lorsque les angles de phase de charge à régler sont supérieurs au minimum ($β_M$).

2. Méthode selon la revendication 1, caractérisée en ce que lorsque l'alimentation est assurée par une source de courant continu, la tension modifiée (U') de la source de courant continu est déterminée à partir de la somme des puissances modifiées à établir ($P_1$', $P_2$') et de l'intensité constante (Id) servant de grandeur auxiliaire, en ce que l'impédance modifiée ($Z_1$', $Z_2$') de chaque circuit oscillant parallèle est déterminée à partir de la tension modifiée (U') et de la puissance modifiée ($P_1$', $P_2$') à établir pour ce circuit oscillant, et en ce que les angles de phase de charge ($β_1$', $β_2$') sont déterminés à partir des impédances modifiées déterminées ($Z_1$', $Z_2$').

3. Méthode selon la revendication 1, caractérisée en ce que lorsque l'alimentation est assurée par une source de tension continue avec bobine d'arrêt montée en série, l'intensité modifiée (Id') est déterminée à partir de la somme des puissances modifiées à établir ($P_1$', $P_2$') et de la tension (U) servant de grandeur auxiliaire, en ce que l'impédance modifiée ($Z_1$', $Z_2$') de chaque circuit oscillant parallèle est déterminée à partir de l'intensité modifiée (Id') et de la puissance modifiée ($P_1$', $P_2$') à établir pour ce circuit oscillant, et en ce que les angles de phase de charge ($β_1$', $β_2$') sont déterminés à partir des impédances modifiées déterminées ($Z_1$', $Z_2$').

# Fig.1

# Fig. 2

Fig. 3

Fig. 4

Fig. 5

9

# Fig.6

# Fig. 7